# EUROPÄISCHE PATENTSCHRIFT

(11) **EP 0 876 024 B1**
(45) Veröffentlichungstag und Bekanntmachung des Hinweises auf die Patenterteilung: **18.05.2005**
(21) Anmeldenummer: 98104253.4
(22) Anmeldetag: 10.03.1998
(51) Int. Cl.: H04L 5/06, H04L 27/26, H04J 11/00

(54) **Verfahren zur Übertragung von Daten mit einem Multiträgerübertragungsverfahren**
Method for data transmission with a multicarrier transmission method
Procédé de transmission de données avec procédé de transmission multiporteuse

(30) Priorität: 02.05.1997 DE 19718492
(43) Veröffentlichungstag der Anmeldung: 04.11.1998
(73) Patentinhaber: ROBERT BOSCH GMBH, 70442 Stuttgart (DE)
(72) Erfinder: Lauterbach, Thomas, 90475 Nürnberg (DE)

(56) Entgegenhaltungen:
- WO-A-92/16063
- WO-A-95/34967
- WO-A-96/02990

## Beschreibung

### Stand der Technik

Die Erfindung geht aus von einem Verfahren zur Übertragung von Daten mit einem Multiträgerübertragungsverfahren nach der Gattung des Hauptanspruchs.

Aus der Broschüre DIGITAL AUDIO BROADCASTING (DAB, Eureka-147 Project, April 1996) ist bekannt, daß zur Übertragung von Rundfunkprogrammen eine zeitliche Folge sogenannter OFDM-(Orthogonal Frequency Division Multiplex) Symbole übertragen wird. Diese Symbole bestehen aus der Summe von jeweils zwei Bits, die auf je eine Trägerfrequenz eines Frequenzträgerkamms aufmoduliert werden. Beispielsweise wird im Transmissionsmodus I die Information auf insgesamt 1536 Trägerfrequenzen aufmoduliert. Die Informationen können aus verschiedenen Datenquellen stammen, sie können z.B. verschiedene Hörfunkprogramme oder Zusatzinformationen in Form von Datendiensten darstellen. Alle Informationen werden als OFDM-Symbole mit gleicher Sendeleistung vom Rundfunksender abgestrahlt. Da vor der Aussendung der Symbole ein Programm-Multiplex gebildet wird, haben alle Programme über die konstante Sendeleistung der Trägerfrequenzen dieselbe Reichweite.

Mit diesem Übertragungsverfahren ist es nicht möglich unterschiedlich große Sendeversorgungsgebiete zu erreichen, und sie z.B. mit unterschiedlichen Programmen zu versorgen. Es ist auch nicht möglich, Programmteile oder Programme über Antennen mit unterschiedlichen Richtcharakteristiken abzustrahlen und so unterschiedliche Versorgungsgebiete abzudecken.

Aus WO 95/34967 ist es bekannt getrennte Programmquellen über getrennte Unterfrequenzbände zu senden.

### Vorteile der Erfindung

Das erfindungsgemäße Verfahren mit den kennzeichnenden Merkmalen des Hauptanspruchs hat demgegenüber den Vorteil, daß Programme oder Programmteile auf unterschiedliche Symbole aufmoduliert werden, die dann verschiedenen Modifikationen vor der Aussendung unterzogen werden können. Vorteilhaft bei diesem Verfahren ist es, daß mit standardisierten DAB-Sendern und Empfängern gearbeitet werden kann.

Durch die in den Unteransprüchen aufgeführten Maßnahmen sind vorteilhafte Weiterbildungen und Verbesserungen des im Hauptanspruch angegebenen Verfahrens möglich. Besonders vorteilhaft ist, daß die Symbole mit unterschiedlichen Sendeleistungen abgestrahlt werden. Dadurch ist es möglich, die Versorgungsgebiete der unterschiedlichen Programme voneinander abzugrenzen. Es ist auf diese Weise einfach möglich, z.B. ein lokales Programm in einem kleinen Versorgungsbereich auszustrahlen, während ein überregionales Programm auf einer zweiten Gruppe von Trägerfrequenzen ein größeres Versorgungsgebiet überstreicht.

Für das Verfahren ist es vorteilhaft, daß mindestens eine Anzahl von Trägerfrequenzen währemd jedes Symbols zur Erhaltung der Synchronisation der Empfänger im Empfangsgebiet ausgestrahlt werden muß, die eine ausreichende Leistung aufweisen. Es werden immer nur so viele Trägerfrequenzen ausgestrahlt, wie zur Synchronisation erforderlich sind, aber eine Auswertung der übertragenen Daten zu einem Informationsstrom außerhalb des beabsichtigten Verrsorgungsgebiets unmöglich ist.

Vorteilhafterweise werden die Informationen des Synchronisationssymbols und der Fast-Information-Symbole mit voller Sendeleistung abgestrahlt.

Vorteilhafterweise ist es auch möglich, wähhrend einer Anzahl von Syymbolen eine Gruppe von Trägerfrequenzen über eine erste Antenne abzustrahlen und über eine zweite Antenne eine weitere Gruppe von Trägerfrequenzen auszusenden. Dadurch ist es möglich, über eine erste Antenne ein erstes Programm auszustrahlen, wobei die zweite Gruppe von Trägerfrequenzen auf Null gesetzt wird und über eine zweite Antenne z.B. mit einem anderen Richtungscharakter eine zweite Gruppe von Trägerfrequenzen mit einem zweiten Programm zu senden. Es ist dadurch möglich, z.B. über eine Antenne ein nahezu kreisförmiges Versorgungsgebiet zu überdecken, während eine zweite Antenne eine Antenne mit Richtcharakter darstellen kann. Es ist ebenfalls möglich, das zweite Programm über die zweite Gruppe von Trägerfrequenzen auf eine von der ersten Antenne räumlich getrennte Antenne zu geben und von dort abzustrahlen.

Vorteilhafter Weise wird die Sendeleistung der Einzelträger während der Berechnung des Sendesignals durch eine schnelle Fouriertransformation geregelt.

### Zeichnung

Ausführungsbeispiele der Erfindung sind in der Zeichnung dargestellt und in der nachfolgenden Beschreibung näher erläutert. Es zeigt Figur 1 einen DAB-Übertragungsrahmen, Figur 2 eine grafische Darstellung der Leistung im Übertragungsrahmen, Figur 3 zeigt die Leistung im Übertragungsrahmen für die zweite Antennengruppe, Figur 4 zeigt das Versorgungsgebiet eines Senders mit unterschiedlicher Leistung und Figur 5 das Versorgungsgebiet eines Senders mit unterschiedlichen Antennen.

### Beschreibung des Ausführungsbeispiels

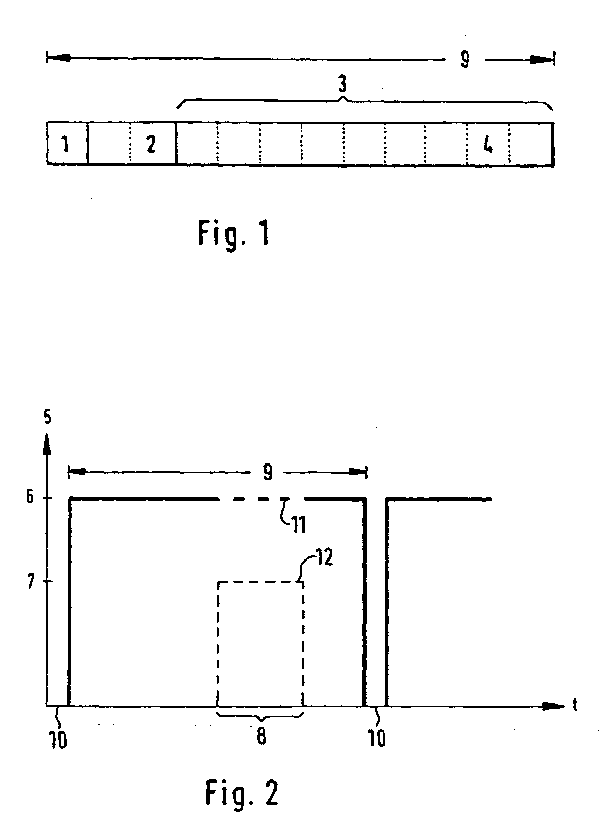

In Figur 1 ist schematisch der Aufbau eines DAB-Übertragungsrahmens dargestellt. Auf das Synchronisationssymbol 1 folgen die Symbole des Fast-Information-Channel (FIC) und des Main-Service-Channel 3. Der Übertragungsrahmen 9 setzt sich aus einzelnen OFDM-Symbolen 4 zusammen. Ein solcher Übertragungsrahmen 9 enthält Informationen verschiedener Datenquelle, z.B. verschiedener Programme. Die Programmdaten werden im Main-Service-Channel 3 übertragen. Im allgemeinen findet ein Programmmultiplex statt, so daß jedes Programm über mehrere OFDM-Symbole jedes Übertragungsrahmens verteilt ist.

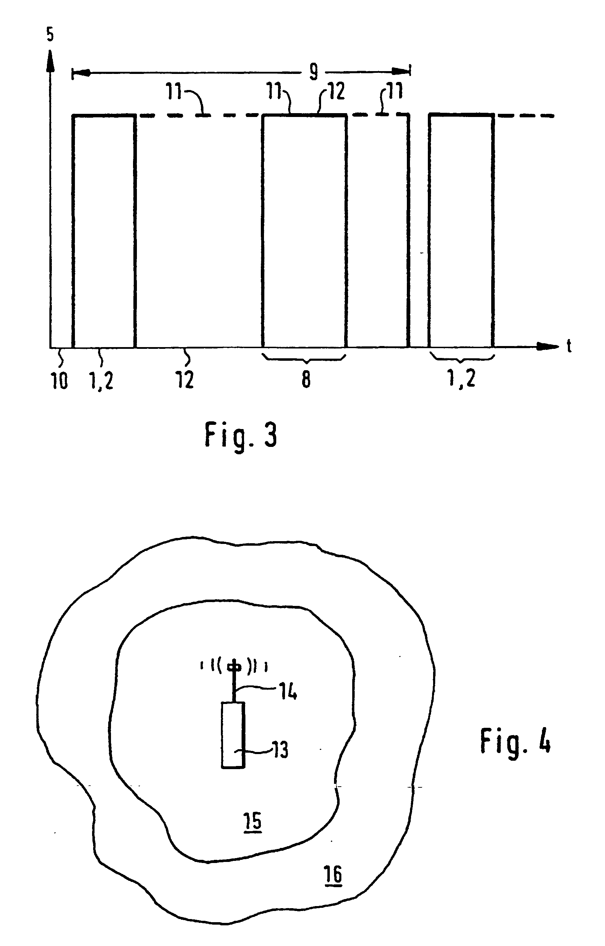

Figur 4 zeigt eine Sendestation 13 mit einer Antenne 14. Der Sender 13 liegt im Zentrum eines ersten Versorgungsgebiets 15 sowie eines größeren Versorgungsgebiets 16. Die DAB-Übertragungsrahmen 9 werden vom Sender 13 über die Antenne 14 in das Versorgungsgebiet 15 abgestrahlt. Bisher war es nur möglich, ein zusammenhängendes Versorgungsgebiet zu überdecken, da die Sendeleistung im Übertragungsrahmen nicht variierbar ist. Über das erfindungsgemäße Verfahren ist es möglich ein erstes Versorgungsgebiet 15 sowie ein zweites Versorgungsgebiet 16 mit einem Sender zu erreichen.

Figur 2 zeigt eine grafische Darstellung der Leistung 5 pro Träger über der Zeit t. Dargestellt ist auf der Zeitachse t das Nullsymbol 10, sowie ein Übertragungsrahmen 9, auf den wieder ein Nullsymbol 10 folgt. Innerhalb des DAB-Übertragungsrahmens 9 gibt es einen Bereich von Programmsymbolen 8, bei denen eine erste Trägergruppe 11 mit voller Leistung 6 abgestrahlt wird, während eine zweite Trägergruppe 12 mit reduzierter Leistung gesendet wird.

Mit dem erfindungsgemäßen Verfahren möchte man zwei unterschiedliche Versorgungsgebiete 15 und 16 mit unterschiedlichen Programmen überstreichen. Dazu wird im DAB Übertragungsrahmen 9 die Sendeleistung der einzelnen Trägerfrequenzen symbolweise variiert. Ausgeschlossen von Variationen bleiben das Synchronisationssymbol 1 sowie die Symbole des FIC-Kanals 2. Diese Symbole werden immer auf voller Leistung gesendet, damit die Empfängersynchronisation und die Verarbeitung der wichtigen FIC-Daten gewährleistet ist. Zu Beginn des Übertragungsrahmens 9 werden alle Trägerfrequenzen auf voller Leistung 6 gesendet. Mit dieser Leistung wird das größere Versorgungsgebiet 16 abgedeckt. Die OFDM-Symbole, die mit voller Leistung gesendet werden, können in beiden Versorgungsgebieten empfangen werden. Möchte man nun ein spezielles Programm nur im eingeengten Versorgungsbereich 15 zur Verfügung stellen, werden die OFDM-Symbole im Bereich des Programms 8 in ihrer Leistung reduziert. Das geschieht so, daß in jedem Symbol 4 jeweils soviele Träger einer ersten Trägergruppe 11 auf voller Leistung bleiben, daß auch im größeren Versorgungsgebiet die Synchronisation der Empfänger erhalten bleibt. Ansonsten würde evtl. das Nichtempfangen von Trägerfrequenzen als Nullsymbol interpretiert, was zur Störung der Synchronisation führt. Die übrigen Träger einer zweiten Trägergruppe 12 werden in ihrer Leistung auf eine reduzierte Leistung 7 zurückgefahren, so daß die Information, die dieser Trägergruppe aufmoduliert wird, nur in einem reduzierten Empfangsbereich ausgewertet werden kann. Die Änderung in der Leistung einzelner Trägerfrequenzen erfolgt bereits bei der Verarbeitung der Daten durch eine FFT (Fast-Fourier-Transformation) im Modulator. Dabei werden die orthogonalen Träger auf einfache Weise generiert und können bereits mit unterschiedlichen Leistungen, je nach Vorgaben, erzeugt werden.

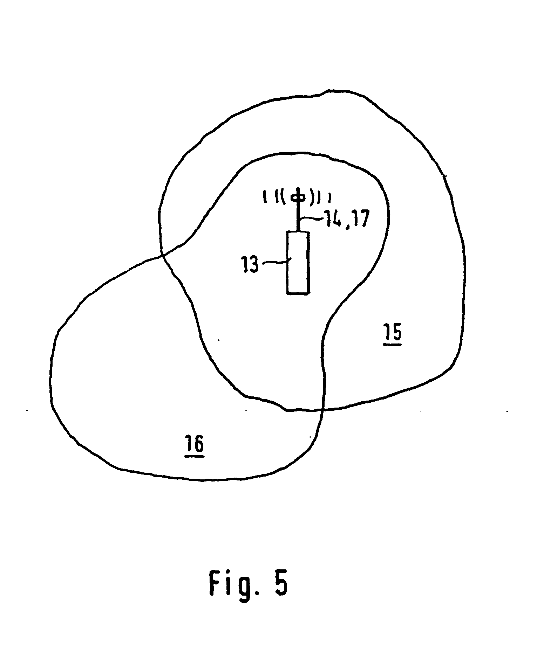

Figur 5 zeigt ein weiteres Ausführungsbeispiel. Ein Sender 13 mit einer Antenne 14 strahlt Signale in ein erstes Versorgungsgebiet 15 sowie ein zweites Versorgungsgebiet 16 ab. In diesem Falle sind die beiden Versorgungsgebiete nicht durch Reduktion oder Erhöhung der Sendeleistung zu überstreichen. Vielmehr ist es so, daß zum Erreichen des Versorgungsgebiets 16 eine Sendeantenne 17 mit Richtcharakteristik eingesetzt wird, während das Versorgungsgebiet 15 über ein Rundstrahlantenne erreicht werden kann. In diesem Ausführungsbeispiel wird der DAB-Übertragungsrahmen 9 parallel über zwei Antennen 15 und 17 ausgestrahlt. Zum einen über die Rundstrahlantenne 15, wie bereits beschrieben. Figur 3 zeigt die grafische Darstellung der Leistung pro Träger über der Zeit t für die Richtantenne 17.

Über die Richtantenne wird das OFDM-Symbol während der Synchronisation und der FIC-Symbole mit voller Leistung abgestrahlt. Die volle Leistung auf allen Trägern wird auch im Bereich 8 bei der Ausstrahlung eines Programms erreicht. In der übrigen Zeit des Übertragungsrahmens 9 werden wiederum nur so viele Träger mit voller Leistung abgestrahlt, daß die Empfängersynchronisation im Versorgungsgebiet 16 gewährleistet ist. Die Abstahlung der Rundantenne 15 erfolgt wie in Fig.2 dargestellt parallel zur Abstrahlung der Richtantenne 17. Die Informationen, die nur in dem von der Richtantenne 17 erreichten Versorgungsgebiet empfangen werden sollen, werden mit der Rundantenne 15 nicht übertragen. Das heißt, die zweite Trägergruppe 12 wird in ihrer Leistung auf Null reduziert, die erste Trägergruppe 11, erhält die Synchronisation.

## Patentansprüche

1. Verfahren zur Übertragung von Daten mit einem Multiträgerübertragungsverfahren, wobei die Daten verschiedener Datenquellen als Symbole auf orthogonale Trägerfrequenzen aufmoduliert werden, **dadurch gekennzeichnet, daß** ein Teil der Daten eines Symbols auf eine erste Gruppe (11) von Trägerfrequenzen und die anderen Teile der Daten auf jeweils zugeordnete weitere Gruppen (12) von Trägerfrequenzen aufmoduliert werden.

2. Verfahren zur Übertragung von Daten mit einem Multiträgerübertragungsverfahren nach Anspruch 1, **dadurch gekennzeichnet, daß** die Gruppen von Trägerfrequenzen (11, 12) mit unterschiedlichen Sendeleistungen (6, 7) abgestrahlt werden.

3. Verfahren zur Übertragung von Daten mit einem Multiträgerübertragungsverfahren nach Anspruch 1 oder 2, **dadurch gekennzeichnet, daß** mindestens eine Gruppe (11) von Trägerfrequenzen mit der zur Synchronisation der Empfänger im Empfangsgebiet notwendigen Leistung (6) abgestrahlt wird.

4. Verfahren zur Übertragung von Daten mit einem Multiträgerübertragungsverfahren nach Anspruch 1 bis 3, **dadurch gekennzeichnet, daß** Synchronisationssymbol (1) und die Fast-Information-Symbole (2) mit voller Sendeleistung (6) abgestrahlt werden.

5. Verfahren zur Übertragung von Daten mit einem Multiträgerübertragungsverfahren nach Anspruch 1 bis 4, **dadurch gekennzeichnet, daß**
a) über eine erste Antenne (14) die erste Gruppe (11) von Trägerfrequenzen mit voller Sendeleistung und die zweite Gruppe (12) von Trägerfrequenzen nicht abgestrahlt wird
b) und daß über eine zweite Antenne (17) alle Gruppen von Trägerfrequenzen während der Dauer von Programmsymbolen (8) gesendet werden.

6. Verfahren zur Übertragung von Daten mit einem Multiträgerübertragungsverfahren nach Anspruch 1 bis 5, **dadurch gekennzeichnet, daß** die Ausstrahlung über die erste Antenne in einem ersten Sendegebiet und die Ausstrahlung über die zweite Antenne in einem zweiten Sendegebiet erfolgt.

7. Verfahren zur Übertragung von Daten mit einem Multiträgerübertragungsverfahren nach Anspruch 1 bis 6, **dadurch gekennzeichnet, daß** die Ausstrahlung über die erste Antenne in einem ersten Sendegebiet und die Ausstrahlung über die zweite Antenne räumlich mindestens teilsweise überlappenden Gebiet erfolgt.

8. Verfahren zur Übertragung von Daten mit einem Multiträgerübertragungsverfahren nach Anspruch 1 bis 7, **dadurch gekennzeichnet, daß** die Variation der Sendeleistung der einzelnen Gruppen von Trägerfrequenzen durch eine Fast-Fourier-Transformation erfolgt.

## Claims

1. Method for transmission of data by means of a multicarrier transmission method, with the data from different data sources being modulated as symbols onto orthogonal carrier frequencies, **characterized in that** a portion of the data in a symbol is modulated onto a first group (11) of carrier frequencies, and the other portions of the data are modulated onto respectively associated further groups (12) of carrier frequencies.

2. Method for transmission of data by means of a multicarrier transmission method according to Claim 1, **characterized in that** the groups of carrier frequencies (11, 12) are transmitted at different transmission power levels (6, 7).

3. Method for transmission of data by means of a multicarrier transmission method according to Claim 1 or 2, **characterized in that** at least one group (11) of carrier frequencies is transmitted at the power level (6) which is required for synchronization of the receivers in the reception area.

4. Method for transmission of data by means of a multicarrier transmission method according to Claim 1 to 3, **characterized in that** a synchronization symbol (1) and the fast information symbols (2) are transmitted at the full transmission power (6).

5. Method for transmission of data by means of a multicarrier transmission method according to Claim 1 to 4, **characterized in that**
a) the first group (11) of carrier frequencies is transmitted with the full transmission power via a first antenna (14) and the second group (12) of carrier frequencies is not transmitted,
b) and **in that** all of the groups of carrier frequencies are transmitted via a second antenna (17) throughout the duration of programme symbols (8).

6. Method for transmission of data by means of a multicarrier transmission method according to Claim 1 to 5, **characterized in that** the transmission via the first antenna takes place in a first transmission area, and the transmission via the second antenna takes place in a second transmission area.

7. Method for transmission of data by means of a multicarrier transmission method according to Claim 1 to 6, **characterized in that** the transmission via the first antenna takes place in a first transmission area, and the transmission via the second antenna takes place in a spatially at least partially overlapping area.

8. Method for transmission of data by means of a multicarrier transmission method according to Claim 1 to 7, **characterized in that** the transmission power of the individual groups of carrier frequencies is varied by means of a Fast Fourier Transformation.

## Revendications

1. Procédé de transmission de données comprenant un procédé de transmission multiporteuse, selon lequel les données de différentes sources de données sont modulées sous la forme de symboles sur des fréquences porteuses orthogonales,
**caractérisé en ce qu'**
une partie des données d'un symbole est modulée sur un premier groupe (11) de fréquences porteuses et les autres parties des données sont modulées sur d'autres groupes (12) de fréquences porteuses respectivement associés.

2. Procédé de transmission de données comprenant un procédé de transmission multiporteuse selon la revendication 1,
**caractérisé en ce que**
les groupes de fréquences porteuses (11, 12) sont émis avec des puissances d'émission (6, 7) différentes.

3. Procédé de transmission de données comprenant un procédé de transmission multiporteuse selon la revendication 1 ou 2,
**caractérisé en ce qu'**
au moins un groupe (11) de fréquences porteuses est émis avec la puissance (6) nécessaire à la synchronisation du destinataire dans la zone de réception.

4. Procédé de transmission de données comprenant un procédé de transmission multiporteuse selon l'une des revendications 1 à 3,
**caractérisé en ce que**
le symbole de synchronisation (1) et les symboles d'information rapide (2) sont émis à pleine puissance d'émission (6).

5. Procédé de transmission de données avec procédé de transmission multiporteuse selon l'une des revendications 1 à 4,
**caractérisé en ce que**
a) d'une première antenne (14) émet, le premier groupe (11) de fréquences porteuses à pleine puissance d'émission et le deuxième groupe (12) n'est pas émis,
b) et une deuxième antenne (17), émet tous les groupes de fréquences porteuses pendant la durée des symboles de programmes (8).

6. Procédé de transmission de données comprenant un procédé de transmission multiporteuse selon l'une des revendications 1 à 5,
**caractérisé en ce que**
l'émission par la première antenne est effectuée dans une première zone d'émission et l'émission par la deuxième antenne est effectuée dans une deuxième zone d'émission.

7. Procédé de transmission de données comprenant un procédé de transmission multiporteuse selon l'une des revendications 1 à 6,
**caractérisé en ce que**
l'émission par la première antenne est effectuée dans une première zone d'émission et l'émission par la deuxième antenne est effectuée dans une zone en chevauchement spatial au moins partiel.

8. Procédé de transmission de données comprenant un procédé de transmission multiporteuse selon l'une des revendications 1 à 7,
**caractérisé en ce que**
la variation de la puissance d'émission des groupes individuels de fréquences porteuses est effectuée par une transformation de Fourier rapide.
